# EUROPEAN PATENT SPECIFICATION

(11) **EP 1 329 284 B1**
(45) Date of publication and mention of the grant of the patent: **27.04.2005**
(21) Application number: 03000868.4
(22) Date of filing: 15.01.2003
(51) Int. Cl.: B23Q 7/04, B23Q 5/38, B23Q 1/01

(54) **Workpiece transfer device for machine tools**
Werkstücktransfervorrichtung für Werkzeugmaschinen
Dispositif de transfert de pièces à usiner pour machine-outils

(30) Priority: 22.01.2002 JP 2002013022
(43) Date of publication of application: 23.07.2003
(73) Proprietor: Mori Seiki Co., Ltd., Yamatokoriyama-shi, Nara-ken 639-1183 (JP)
(72) Inventor: Watanabe, Michio, Mori Seiki Co., Ltd., Yamatokoriyama-shi, Nara-ken 639-1183 (JP); Okuyama, Yoshinobu, Mori Seiki Co., Ltd., Yamatokoriyama-shi, Nara-ken 639-1183 (JP)
(74) Representative: Kern, Ralf M., Dipl.-Ing.

(56) References cited:
- US-A- 4 998 442
- US-A- 5 267 478

## Description

### BACKGROUND OF THE INVENTION

The present invention relates to a workpiece transfer device for machine tools, which device is so constructed that a support member in which a workpiece holding mechanism is mounted on a frame member extending from a workpiece machining position to a workpiece loading/unloading position is hung via a linear guide, the support member being reciprocatingly moved by a rack-and-pinion drive mechanism.

In recent years, some machine tools are equipped with a workpiece transfer device which is so designed as to automatically and continuously perform such working processes as receiving an unprocessed workpiece from the workpiece stocker disposed at the workpiece loading/unloading position, loading the workpiece to a chuck of a spindle, which is the workpiece machining position, receiving the processed workpiece from the chuck of the spindle, and unloading the workpiece to the workpiece stocker.

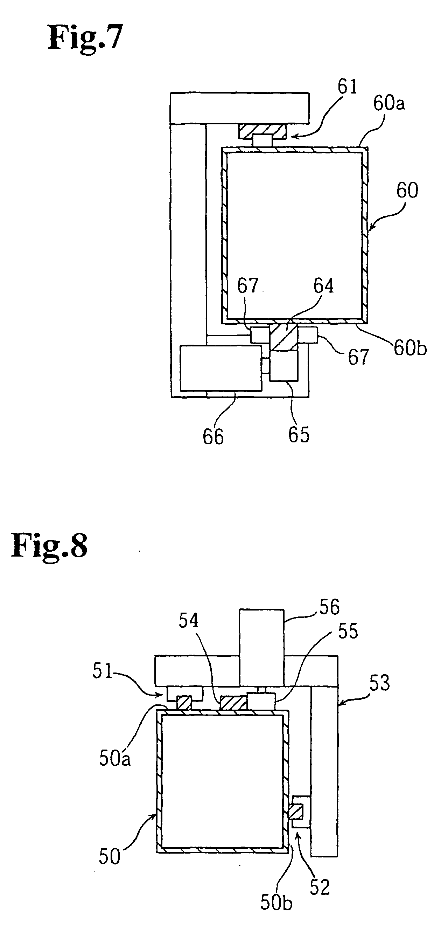

As such a workpiece transfer device, there has conventionally been provided a workpiece transfer device which comprises, as shown in Fig. 8, a rectangular-cylindrical frame member 50 extending from a workpiece machining position to a workpiece loading/unloading position, a support member 53 which is reciprocatably supported by two linear guides 51, 52 disposed on a top wall 50a and a side wall 50b of the frame member 50 and which has a workpiece holding mechanism (not shown) mounted thereon, a rack 54 disposed on the top wall 50a of the frame member 50 so as to be along the linear guide 51, and a drive motor 56 for rotationally driving a pinion gear 55 engaged with the rack 54 to thereby reciprocatingly move the support member 53.

However, in this prior-art transfer device, since the transfer device adopts a structure that the support member 53 is supported by two costly linear guides 51, 52, there is a problem that the cost for the whole device would increase. Also, since the linear guides are disposed on two adjacent wall surfaces of the frame member, there is a need for ensuring a relative dimensional accuracy of linear-guide fitting surfaces of the frame member to each other. In this respect also, the transfer device would become high in cost.

Meanwhile, as a structure that allows the linear guides to be reduced to one linear guide, there is another transfer device, according to the preamble of claim 1 or 3, in which, as shown in Fig. 7, one linear guide 61 is disposed on a top wall surface 60a of a frame member 60, while a rack 64 is disposed on a bottom wall surface 60b on the symmetrically opposite side of the top wall surface 60a, where the rack 64 has its right-and-left side faces pinched and held by a pair of cam followers 67, 67 and a pinion gear 65 engaged with the rack 64 is rotationally driven by a drive motor 66.

In the case of this structure, since one linear guide 61 will do, increases in cost can be suppressed, as compared to the structure in which the two linear guides are used for the support.

In this connection, steel tubes for general structural purpose, which requires a relatively lower dimensional accuracy, are adopted for the frame member 60. With the adoption of a structure that the linear guide 61 is fitted to the top wall surface 60a of such a frame member 60 as described above, and that the rack 64 is disposed on the bottom wall surface 60b, there is a difficulty in adjusting the vertical position of the rack 64 relative to the linear guide 61, which poses a fear for occurrence of vibrations or noise. Indeed the above problem could be solved by performing machining process on the wall surfaces of the frame member 60, yet doing so would lead to increases in cost, impractically.

### SUMMARY OF THE INVENTION

The present invention having been accomplished in view of these circumstances, an object of the invention is to provide a workpiece transfer device for machine tools, the workpiece transfer device capable of easily achieving positional adjustment of the rack while suppressing increases in cost, and therefore of preventing occurrences of vibrations and noise.

In a first aspect of the invention, there is provided a workpiece transfer device for machine tools, comprising: a frame member having a rectangular cross-sectional shape and extending at least from a workpiece machining position to a workpiece loading/unloading position; a support member which is hung on the frame member so as to be movable via a linear guide and which has a workpiece holding mechanism mounted thereon; and a drive mechanism disposed on the support member and serving for rotationally driving a pinion gear engaged with a rack, which is provided on the frame member so as to be parallel to the linear guide, so that the support member is reciprocatingly moved between the workpiece machining position and the workpiece loading/unloading position, wherein the linear guide is disposed on one wall surface of the frame member, and the rack is disposed on another wall surface of the frame member adjoining said one wall surface so as to be adjustable in its position relative to the linear guide.

In a second aspect of the invention, in the workpiece transfer device for machine tools as described in the first aspect, the linear guide is disposed on a top wall surface of the frame member, the rack is disposed on a side wall surface of the frame member, and cam followers for pinching and holding the rack are further provided on the support member.

In a third aspect of the invention, there is provided a workpiece transfer device for machine tools similar to that of the first aspect, wherein the linear guide and the rack are disposed on one same wall surface of the frame member, and the rack is adjustable in its position relative to the linear guide.

In a fourth aspect of the invention, in the workpiece transfer device for machine tools as described in the third aspect, the linear guide and the rack are disposed on one side wall surface of the frame member, and cam followers for pinching and holding the rack are further provided on the support member.

With the workpiece transfer device according to the first aspect of the invention, since the linear guide is disposed on one wall surface of the frame member and the rack is disposed on another wall surface of the frame member adjoining the one wall surface, for example as in the second aspect of the invention, since the linear guide is disposed on the top wall surface and the rack is disposed on the side wall surface, positional adjustment of the rack relative to the linear guide can be fulfilled with ease, and moreover occurrence of vibrations or noise can be prevented while reducing the number of component parts. Also, since only one fitting surface for the linear guide will do, the frame member may be lower in dimensional accuracy, as compared with cases where two linear-guide fitting surfaces are necessary.

Further, since the size of the rack in an adjustment direction (rack thickness) can be increased without increasing the height of the support member, warping of the rack during the tooth-cutting process can be suppressed.

With the workpiece transfer device for machine tools according to the third aspect of the invention, since the linear guide and the rack are disposed on one same wall surface of the frame member, for example as in the fourth aspect of the invention, since the linear guide and the rack are disposed on one side wall surface of the frame member, positional adjustment of the rack relative to the linear guide can be fulfilled with ease, and moreover occurrence of vibrations or noise can be prevented while reducing the number of component parts, where the same effects as in the first aspect can be obtained.

Also, since the linear guide and the rack are disposed on one side wall surface, it suffices to perform planar machining only on the side wall surface, thus allowing the machining cost to be reduced as compared with cases where two wall surfaces are subjected to machining.

### BRIEF DESCRIPTION OF THE DRAWINGS

Fig. 1 is a front view of a lathe equipped with a workpiece transfer device according to a first embodiment of the invention in first and second aspects of the present invention;
Fig. 2 is a plan view of the lathe;
Fig. 3 is a schematic perspective view of the workpiece transfer device;
Fig. 4 is a schematic perspective view of the workpiece transfer device;
Fig. 5 is a sectional view of the workpiece transfer device;
Fig. 6 is a sectional view for explaining a workpiece transfer device according to a second embodiment of the invention in third and fourth aspects of the present invention;
Fig. 7 is a sectional view of a common workpiece transfer device according to a prior art; and
Fig. 8 is a sectional view of a workpiece transfer device according to a prior art.

### DETAILED DESCRIPTION OF THE PREFERRED EMBODIMENTS

Hereinbelow, embodiments of the present invention are described with reference to the accompanying drawings.

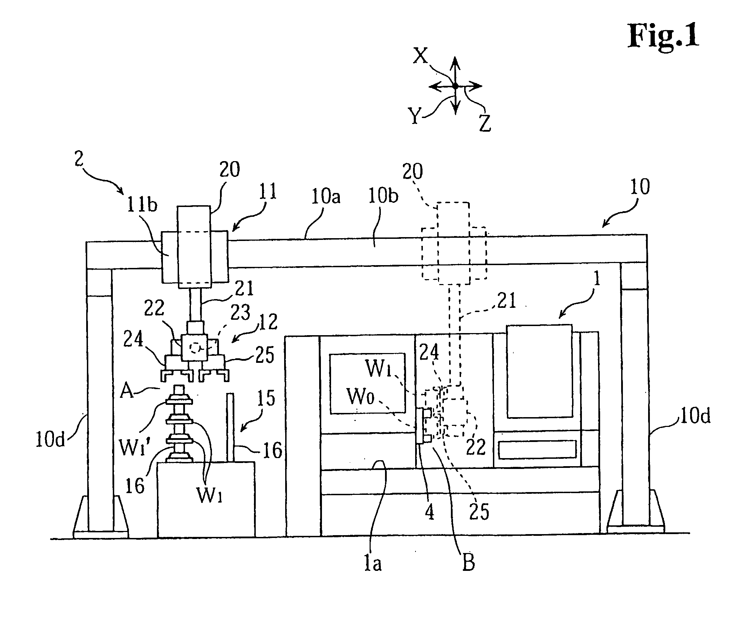

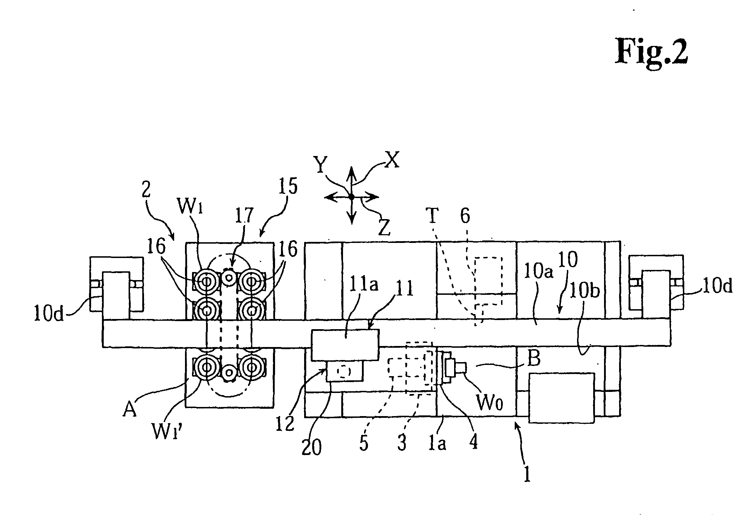

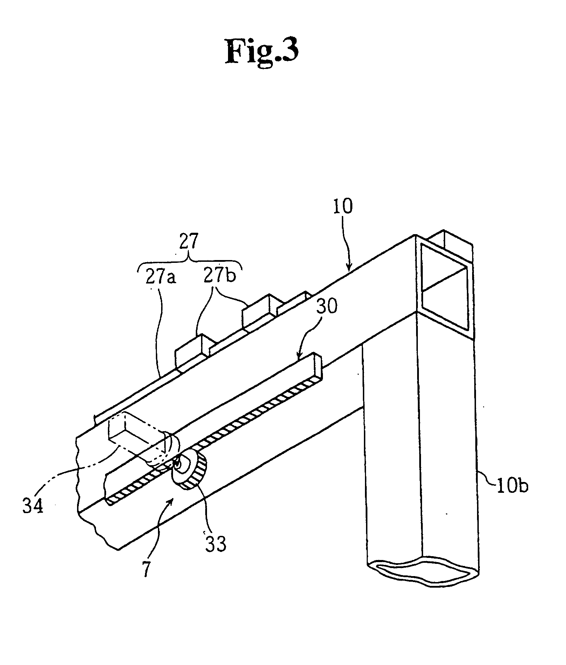

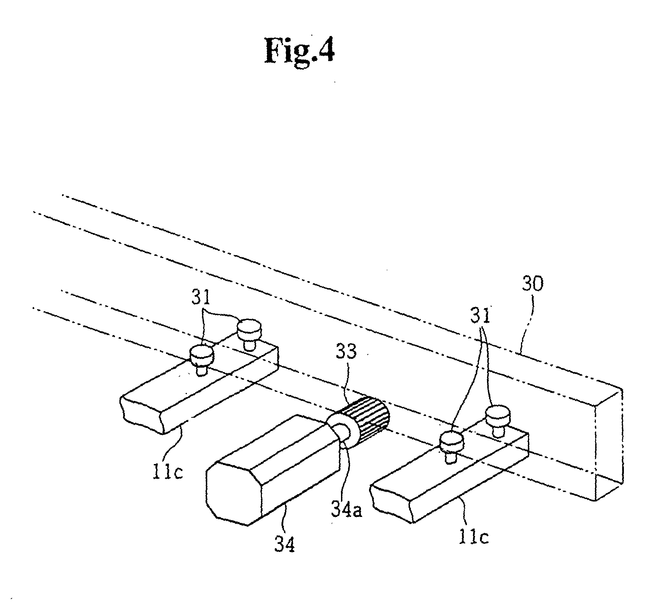

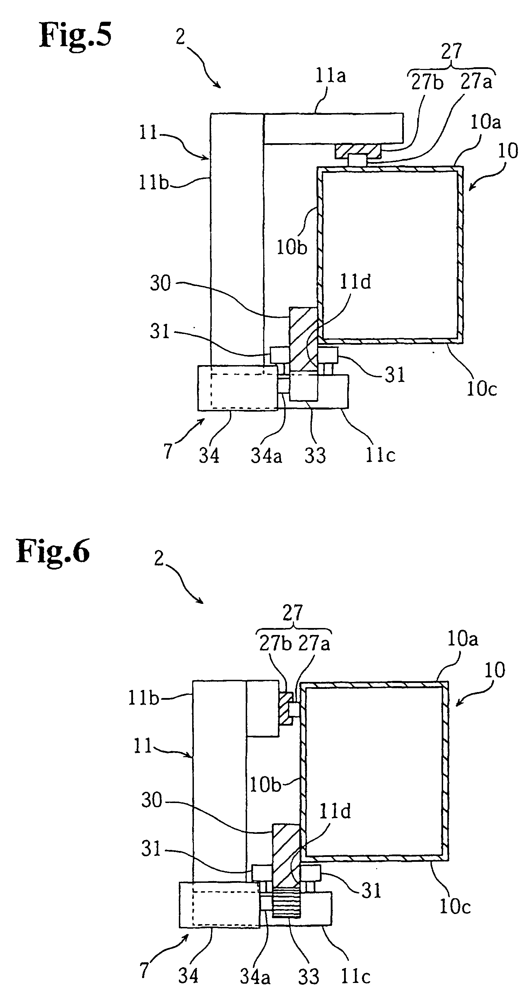

Figs. 1 to 5 are views for explaining a workpiece transfer device for lathes (machine tools) according to one embodiment (first embodiment) of the invention in its first and second aspects. Figs. 1 and 2 are a front view and a plan view, respectively, of a lathe equipped with the workpiece transfer device, Figs. 3 and 4 are schematic perspective views of the workpiece transfer device, and Fig. 5 is a sectional view of the workpiece transfer device.

Referring to the figures, reference numeral 1 denotes a lathe equipped with a workpiece transfer device 2, and the lathe 1 is so constructed, in outline, that a spindle 5 having a chuck 4 for holding a workpiece is rotatably supported by a headstock 3 provided on a fixed bed 1a, while a tool rest 6 loaded with a plurality of tools T is provided on the fixed bed 1a so as to be relatively movable along X-axis, Y-axis and Z-axis directions. Then, the tool rest 6 is relatively moved, by which the workpiece held by the chuck 4 is machined with the tool T.

The workpiece transfer device 2, which is disposed above the lathe 1, comprises a frame member 10 extending from a workpiece loading/unloading position A to a workpiece machining position B, a support member 11 supported by the frame member 10 so as to be movable in the Z-axis direction, a workpiece holding mechanism 12 mounted on the support member 11, and a drive mechanism 7.

The frame member 10, which is made of a square pipe steel having an oblong-shaped cross section, is hung and supported by column members 10d, 10d provided vertical at left-and-right end portions.

A workpiece stocker 15 is provided at the workpiece loading/unloading position A. This workpiece stocker 15 has a plurality of guide shafts 16 for supporting a plurality of unprocessed workpieces W1 in a stacked state, and a transfer drive mechanism 17 for transferring a next-process workpiece W1' out of the unprocessed workpieces W1 to the workpiece takeout position.

The workpiece holding mechanism 12 has a up-and-down moving mechanism 20 placed and fixed on the support member 11, a loader arm 21 to be driven into up and down movement in the Y-axis direction by the up-and-down moving mechanism 20, and a loader head 22 fitted at a lower end of the loader arm 21. This loader head 22 is formed so as to be turnable to 90 degrees about a shaft 23 perpendicular to an axis of the loader arm 21 by an unshown drive mechanism.

The loader head 22 is fitted with a pair of hands 24, 25 for holding a next-process workpiece W1' and a processed workpiece W0. Each of these hands 24, 25 can be directed leftward in the Z-axis direction (see broken line in Fig. 1) or downward in the Y-axis direction (see solid line in Fig. 1) by the 90-degree turn.

The support member 11 has a lateral side portion 11a opposed to a top wall 10a of the frame member 10, a longitudinal side portion 11b extending downward from a front end portion of the lateral side portion 11a and opposed to a front side wall 10b of the frame member 10, and a left-and-right pair of lower side portions 11c extending from a lower end portion of the longitudinal side portion 11b downward of a bottom wall 10c of the frame member 10. The workpiece holding mechanism 12 is attached at the longitudinal side portion 11b.

Between the top wall 10a of the frame member 10 and the lateral side portion 11a of the support member 11 is provided a linear guide 27. This linear guide 27 is so constructed that a pair of bearing blocks 27b, 27b disposed at the lateral side portion 11a of the support member 11 so as to be fixedly spaced from each other are slidably fitted to a guide rail 27a fixedly disposed on the top wall 10a so as to extend lengthwise of the top wall 10a. As a result of this, the support member 11 is supported by the frame member 10 so as to be movable in the Z-axis direction via the linear guide 27.

Further, a rack 30 is provided parallel to the guide rail 27a at a lower end portion of the front side wall 10b adjoining the top wall 10a of the frame member 10. This rack 30 is formed into a vertically oblong bar-shaped body, as viewed in its cross section, and fixedly disposed on the front side wall 10b so as to be adjustable in its vertical position relative to the linear guide 27. More specifically, the rack 30 is bolted and fixed to the front side wall 10b of the frame member 10, where the bolt insertion hole is formed into vertically longer elongate hole. The rack 30 is adjusted in its fitting position so that its distance to the linear guide 27 becomes constant over the entire length of the rack 30.

A lower portion of the rack 30 is protruding downward of the bottom wall 10c of the frame member 10, and a lower surface of the protruding portion has rack teeth formed by tooth-cutting.

A pair of cam followers 31, 31 in rolling contact with front side face and rear side face of the rack 30 are pivotally held on lower side-verge portions, respectively, of the support member 11. Forward and backward movement of the lower side portions 11c is regulated by the cam followers 31, 31.

Further, a pinion gear 33 is engaged with the rack teeth of the rack 30, and the pinion gear 33 is mounted on a rotating shaft 34a of a drive motor 34. This drive motor 34 is fixedly placed on the support member 11, and when the drive motor 34 drives the pinion gear 33 into rotation, the support member 11 is reciprocatingly moved between the workpiece loading/unloading position A and the workpiece machining position B.

Next, working effects of this embodiment are described.

In the workpiece loading/unloading position A, the loader arm 21 moves down along the Y-axis direction, holding the next-process workpiece W1' by its one hand 24, and then moves up to the upper end in the Y-axis direction while holding the workpiece W1'. Subsequently, the support member 11 moves along the frame member 10 to the spindle side of the Z-axis direction.

When the machining on the workpiece held by the chuck 4 of the lathe 1 is completed, the tool rest 6 moves back, and stands by. Then, the hands 24, 25 turn so as to face the chuck 4, and the loader arm 21 moves down in the Y-axis direction, so that the other empty hand 25 is positioned to the workpiece machining position B confronting the chuck 4.

The hand 25 moves to the chuck side in the Z-axis direction, holding the processed workpiece W0 held by the chuck 4, and slightly moves back in the Z-axis direction, pulling the processed workpiece W0 off. In this state, the hand 25 moves down in the Y-axis direction, and the one hand 24 is positioned to the workpiece machining position B, moving forward in the Z-axis direction, where the next-process workpiece W1' is mounted and held on the chuck 4. In this way, the processed workpiece W0 and the next-process workpiece W1' are automatically exchanged therebetween.

Next, the loader arm 21 moves up in the Y-axis direction and then moves to the workpiece stocker side in the Z-axis direction. The hands 24, 25 are turned downward and moved down in the Y-axis direction, where the processed workpiece W0 is inserted into the empty guide shaft 16 and stored to the workpiece stocker 15.

According to the workpiece transfer device 2 of this embodiment, since the linear guide 27 is disposed between the top wall 10a of the frame member 10 and the lateral side portion 11a of the support member 11 and since the rack 30 is disposed on the front side wall 10b adjoining the top wall 10a, vertical positional adjustment of the rack 30 relative to the linear guide 27 can be fulfilled with ease by utilizing the bolt insertion hole, which is an elongate hole, as the fitting position of this rack 30, and moreover occurrence of vibrations or noise can be prevented while adopting a square pipe steel for building use, which is relatively low in dimensional accuracy, as the frame member 10.

Further, since the vertical size of the rack 30 (rack thickness) can be increased without increasing the height of the support member 11, warping of the rack 30 during the formation of the rack teeth at its lower surface by tooth-cutting can be suppressed.

Furthermore, front and rear side faces of the rack 30 can be pinched and held easily and securely by the cam followers 31, 31, so that back-and-forth vibrations of the support member 11 can be prevented notwithstanding one linear guide.

Fig. 6 is a view for explaining a workpiece transfer device according to one embodiment (second embodiment) of the invention in its third and fourth aspects. In the figure, the same reference numerals as those of Fig. 5 show the same or equivalent component members.

The workpiece transfer device 2 of this embodiment comprises a frame member 10 extending from a workpiece loading/unloading position A to a workpiece machining position B, a support member 11 supported by the frame member 10 so as to be movable in the Z-axis direction, a workpiece holding mechanism 12 mounted on the support member 11, and a drive mechanism 7. Basic construction of this workpiece transfer device 2 is similar to that of the first embodiment.

Further, a linear guide 27 and a rack 30 are disposed on a front side wall 10b of the frame member 10. This linear guide 27 is fixedly placed at an upper end portion of the front side wall 10b, and the rack 30 is fixedly disposed at a lower end portion of the front side wall 10b so as to be adjustable in its vertical position relative to the linear guide 27.

According to this embodiment, since the linear guide 27 and the rack 30 are disposed on the front side wall 10b of the frame member 10, vertical positional adjustment of the rack 30 relative to the linear guide 27 can be fulfilled with ease by utilizing the bolt insertion hole, which is an elongate hole, as the fitting position of this rack 30, where the same effects as in the first embodiment can be obtained.

Furthermore, in this embodiment, since the linear guide 27 and the rack 30 are disposed on the same plane of the front side wall 10b, it suffices to perform planar machining only on the front side wall 10b, thus allowing the machining cost to be reduced as compared with cases where two wall surfaces are subjected to machining.

## Claims

1. A workpiece transfer device (2) for machine tools, comprising: a frame member (10) having a rectangular cross-sectional shape and extending at least from a workpiece machining position (B) to a workpiece loading/unloading position (A); a support member (11) which is hung on the frame member so as to be movable via a linear guide (27) and which has a workpiece holding mechanism (12) mounted thereon; and a drive mechanism disposed on the support member and serving for rotationally driving a pinion gear (33) engaged with a rack (30), which is provided on the frame member so as to be parallel to the linear guide (27), so that the support member is reciprocatingly moved between the workpiece machining position and the workpiece loading/unloading position, **characterised in that** the linear guide (27) is disposed on one wall surface of the frame member (10), and the rack (30) is disposed on another wall surface of the frame member adjoining said one wall surface so as to be adjustable in its position relative to the linear guide.

2. The workpiece transfer device for machine tools according to Claim 1, wherein the linear guide is disposed on a top wall surface (10a) of the frame member, the rack is disposed on a side wall surface (10b) of the frame member, and cam followers (31) for pinching and holding the rack are further provided on the support member.

3. A workpiece transfer device for machine tools, comprising: a frame member having a rectangular cross-sectional shape and extending at least from a workpiece machining position to a workpiece loading/unloading position; a support member which is hung on the frame member so as to be movable via a linear guide and which has a workpiece holding mechanism mounted thereon; and a drive mechanism disposed on the support member and serving for rotationally driving a pinion gear engaged with a rack, which is provided on the frame member so as to be parallel to the linear guide, so that the support member is reciprocatingly moved between the workpiece machining position and the workpiece loading/unloading position, **characterised in that** the linear guide (27) and the rack (30) are disposed on one same wall surface of the frame member (10), and the rack is adjustable in its position relative to the linear guide.

4. The workpiece transfer device for machine tools according to Claim 3, wherein the linear guide and the rack are disposed on one side wall surface of the frame member, and cam followers (31) for pinching and holding the rack (30) are further provided on the support member (11).

## Patentansprüche

1. Werkstücktransfervorrichtung (2) für Werkzeugmaschinen umfassend: einen Rahmenteil (1), der eine rechteckige Querschnittsform hat und sich wenigstens von einer Werkstück-Bearbeitungsposition (B) einer Werkstücklade/Enltladeposition (A) erstreckt; einen Lagerteil (11), der auf dem Rahmenteil aufgehängt ist, so daß er über eine Linearführung (27) bewegbar ist, und der einen Werkstückhaltemechanismus (12) darauf montiert hat; und einen Antriebsmechanismus, der auf dem Lagerteil angeordnet ist und dazu dient, eine Getrieberitzel (33) drehbar anzutreiben, das an einer Zahnstange (30) angreift, die auf dem Rahmenteil vorgesehen ist, so daß sie parallel zu der Linearführung (27) ist, so daß der Lagerteil zwischen der Werkstückbearbeitungsposition und der Werkstücklade/Entladeposition hin und her bewegt wird, **dadurch gekennzeichnet, daß** die Linearführung (27) auf einer Wandfläche des Rahmenteils (10) angeordnet ist, und daß die Zahnstange (30) auf einer anderen Wandoberfläche des Rahmenteils, die an der erst genannten Wandoberfläche angrenzt, angeordnet ist, so daß er in seiner Position relativ zu der Linearführung einstellbar ist.

2. Werkstücktransfervorrichtung für Maschinenwerkzeuge nach Anspruch 1, worin die Linearführung auf der oberen Wandoberfläche (10a) des Rahmenteils angeordnet ist, die Zahnstange auf einer Seitenwandoberfläche (10b) des Rahmenteils angeordnet ist und Nockenfolger (31) zum Einklemmen und Halten der Zahnstange des weiteren auf dem Lagerteil vorgesehen sind.

3. Werkstücktransfervorrichtung (2) für Werkzeugmaschinen umfassend: einen Rahmenteil, der eine rechteckige Querschnittsform hat und sich wenigstens von einer Werkstück-Bearbeitungsposition einer Werkstücklade/Enltladeposition erstreckt; einen Lagerteil, der auf dem Rahmenteil aufgehängt ist, so daß er über eine Linearführung bewegbar ist, und der einen Werkstückhaltemechanismus darauf montiert hat; und einen Antriebsmechanismus, der auf dem Lagerteil angeordnet ist und dazu dient, eine Getrieberitzel drehbar anzutreiben, das an einer Zahnstange angreift, die auf dem Rahmenteil vorgesehen ist, so daß sie parallel zu der Linearführung ist, so daß der Lagerteil zwischen der Werkstückbearbeitungsposition und der Werkstücklade/Entladeposition hin und her bewegt wird, **dadurch gekennzeichnet, daß** die Linearführung (27) und die Zahnstange (30) auf ein und derselben Wandoberfläche des Rahmenteils (10) angeordnet sind, und daß die Zahnstange in ihrer Position relativ zu der Linearführung einstellbar ist.

4. Werkstücktransfervorrichtung für Maschinenwerkzeuge nach Anspruch 3, worin die Linearführung und die Zahnstange auf einer Seitenwandoberfläche des Rahmenteils angeordnet sind, und Nockenfolger (31) zum Einklemmen und Halten der Zahnstange (30) des weiteren auf dem Lagerteil (11) vorgesehen sind.

## Revendications

1. Dispositif de transfert de pièces à usiner (2) pour machine-outils, comprenant: un élément de cadre (10) ayant une forme rectangulaire en section et s'étendant au moins d'une position d'usinage de la pièce à usiner (B) à une position de chargement/déchargement de la pièce à usiner (A); une pièce support (11) qui est fixée sur l'élément de cadre de sorte qu'elle soit mobile par un guide linéaire (27) et qui a un mécanisme de fixation de la pièce à usiner (12) monté sur celle-ci; et un mécanisme d'actionnement disposé sur la pièce support et servant pour l'actionnement par rotation d'un pignon d'engrenage (33) engagé avec une crémaillère (30), qui est prévu sur l'élément de cadre pour être parallèle au guide linéaire (27), de sorte que la pièce support soit mue alternativement entre la position d'usinage de la pièce à usiner et la position de chargement/déchargement de la pièce à usiner, **caractérisé en ce que**, le guide linéaire (27) est disposé sur une surface de la paroi de l'élément de cadre (10) et la crémaillère (30) est disposée sur l'autre surface de la paroi de l'élément de cadre adjacente à ladite une surface de la paroi de sorte qu'elle soit réglable dans sa position relativement au guide linéaire.

2. Dispositif de transfert de pièces à usiner pour machine-outils selon la revendication 1, où le guide linéaire est disposé sur une surface de la paroi supérieure (10a) de l'élément de cadre, la crémaillère étant disposée sur une surface de la paroi latérale (10b) de l'élément de cadre et les galets (31) pour presser et tenir la crémaillère sont prévus de plus sur la pièce support.

3. Dispositif de transfert de pièces à usiner pour machine-outils, comprenant: un élément de cadre ayant une forme rectangulaire en section et s'étendant au moins d'une position d'usinage de la pièce à usiner à une position de chargement/déchargement de la pièce à usiner; une pièce support qui est fixée sur l'élément de cadre de sorte qu'elle soit mobile par un guide linéaire et qui a un mécanisme de fixation de la pièce à usiner monté sur celle-ci; et un mécanisme d'actionnement disposé sur la pièce support et servant pour l'actionnement par rotation d'un pignon d'engrenage engagé avec une crémaillère, qui est prévu sur l'élément de cadre pour être parallèle au guide linéaire, de sorte que la pièce support soit mue alternativement entre la position d'usinage de la pièce à usiner et la position de chargement/déchargement de la pièce à usiner, **caractérisé en ce que**, le guide linéaire (27) et la crémaillère (30) sont disposés sur la même surface de la paroi de l'élément de cadre (10), et la crémaillère est réglable dans sa position relativement au guide linéaire.

4. Dispositif de transfert de pièces à usiner pour machine-outils selon la revendication 3, où le guide linéaire et la crémaillère sont disposés sur une surface de la paroi latérale de l'élément de cadre et les galets (31) pour presser et tenir la crémaillère (30) sont prévus de plus sur la pièce support (11).
